Europäisches Patentamt

European Patent Office

Office européen des brevets

(19)

(11) EP 1 083 688 A2

(12) EUROPEAN PATENT APPLICATION

(43) Date of publication:
14.03.2001  Bulletin 2001/11

(51) Int Cl.$^7$: H04J 3/06

(21) Application number: 00307789.8

(22) Date of filing: 08.09.2000

| | |
|---|---|
| (84) Designated Contracting States:<br>**AT BE CH CY DE DK ES FI FR GB GR IE IT LI LU MC NL PT SE**<br>Designated Extension States:<br>**AL LT LV MK RO SI** | (72) Inventors:<br>• **Hill, David**<br>  **Southampton, Hampshire SO17 1EN (GB)**<br>• **McSparron, Neil Martin**<br>  **Winchester, Hampshire SO23 0PP (GB)** |
| (30) Priority: **09.09.1999  GB 9921261** | (74) Representative: **Molyneaux, Martyn William**<br>**Langner Parry**<br>**52-54 High Holborn**<br>**London WC1V 6RR (GB)** |
| (71) Applicant: **Tandberg Television ASA**<br>**1326 Lysaker (NO)** | |

(54) **Method and apparatus for processing a digital bitstream**

(57)     A method of processing an input bit stream (200) which includes a plurality of data packets and synchronisation markers to produce an output bit stream (214) at a predetermined bit rate, in which the average bit rate of the input bit stream is not greater than the predetermined bit rate is disclosed. The method includes the steps of measuring (202) the bit rate of the input bit stream, inserting null information(206) into the input bit stream to increase the bit rate of the input bit stream to substantially match the predetermined bit rate, deriving (208-212) a delay of the input bit stream introduced by inserting step, and amending (212) the synchronisation markers in dependence of the derived delay. An apparatus for performing the method is also disclosed.

# Fig.2.

**Description**

The present invention relates to the field of digital broadcasting, and more particularly, the processing of digital transport streams.

In a digital broadcasting system, a digital transport stream is created from a number of different sources, such as video, audio, data and control sources. These individual sources are usually encoded and multiplexed together to form a robust digital transport stream which is suitable for broadcast over a transmission network such as for example a satellite, terrestrial or microwave network.

Typically a transport stream is produced at a broadcast head-end, such as a television station. The transport stream is then transmitted to a modulator where it is modulated into a form suitable for broadcast over the chosen transmission network. For a terrestrial network, the modulator is usually situated in close proximity to a broadcast antenna. For a satellite network, the modulator is usually situated near a satellite uplink station. Whichever kind of transmission network is used, the site where the transport stream is produced and the site where the transport stream is broadcast are rarely in the same place, and may be many hundreds of kilometres away.

In order to correctly modulate a transport stream, modulators require the transport stream to have a precise bit rate relative to the internal clocks of the modulator. The transport stream may be transmitted to a remote modulator via a telecommunications network. However, the telecommunication networks often introduce some degree of jitter or delay into the transport stream. Problems also arise in other situations where it is not possible to lock the bit rates of the equipment being used to the bit rate of the transport stream source.

One way of ensuring the precision of the transport stream bit rate is by inserting an appropriate number of null packets. This technique is commonly known as transport rate adaptation. For transport rate adaptation to work, the incoming transport stream must have a lower bit rate than required by the modulator to allow null packets to be inserted.

There are a number of different standards relating to transport streams, but for ease of explanation reference will be made only to transport streams complying with the Moving Pictures Expert Group (MPEG-2) standard. It will be understood by those skilled in the art that the same techniques can be used for other types of packetised data streams.

An MPEG-2 compliant transport stream includes interspersed clock references, known as program clock references (PCR). Each PCR is a reference value to a 27MHz counter at the original transport stream source (e.g. an encoder) and is used to synchronise the clocks of a receiver.

The PCR values in the transport stream should correspond to the precise moment in time that they are to be presented to a receiver so that smooth clock synchronisation can be achieved. If a null packet is inserted, as described above, the PCR values either side of the null packet are presented at different times from the times they represent. In other words, the PCR has become corrupted. To eliminate the corruption the affected PCR values must be changed to take account of any insertion of null packets.

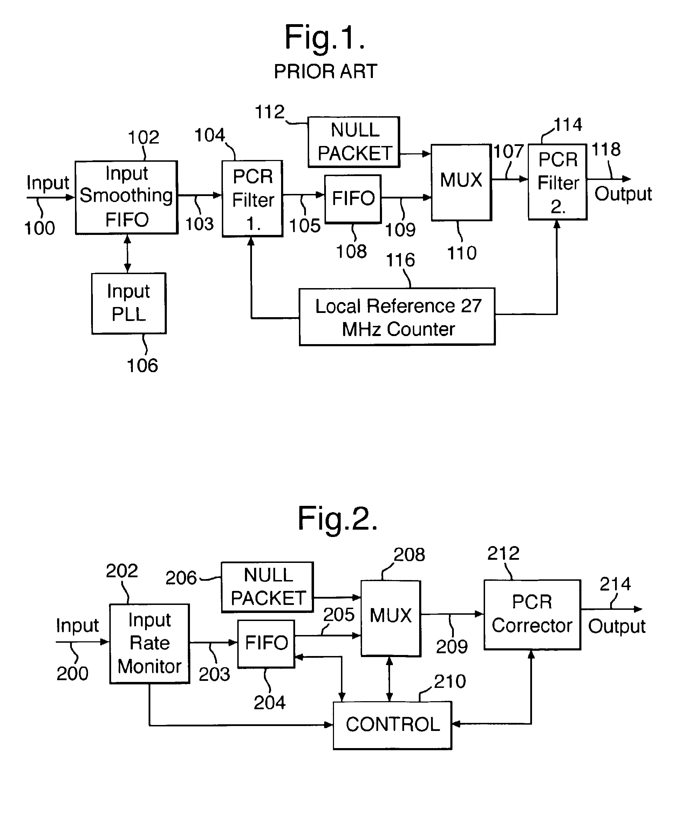

A prior art transport rate adaptation system is shown in Figure 1. A transport stream 100 is input to an input buffer 102. The input buffer 102 is a first in first out (FIFO) buffer which helps smooth any jitter in the input signal. An input phase locked loop (PLL) 106 is used to synchronise the output rate of FIFO 102 to that of the input rate. The smoothed transport stream 103 is then input to a PCR filter 104. The PCR filter 104 locates PCR values in the transport stream 103 and subtracts a local reference 27 MHz counter value, supplied by a local reference counter 116 from each PCR value. This new value is then used to overwrite the existing PCR value in the transport stream, creating a further modified transport stream 105. The transport stream 105 is then input to a FIFO buffer 108. The output 109 of the FIFO 108 is fed to a multiplexer 110 together with the output from a null packet generator 112. The multiplexer 110 inserts null packets from null packet generator 112 into the transport stream output 109. The number and frequency of null packets inserted is dependent on the bit rate which is required for the transport stream. An output transport stream 107 produced by the multiplexer 110 is subsequently input to a second PCR filter 114. The second PCR filter 114 modifies all PCR values in the transport stream 107 by adding a local reference 27 MHz counter value, supplied by the local reference counter 116, to each PCR value. Output 118 is therefore a transport rate adapted transport stream, which has been adapted to have a bit rate suitable for input to a modulator.

The difference in PCR value between the input and output of this process is equal to the change in the local 27 MHz reference counter over this period of time. Since the change in PCR value is equal to the delay of the transport rate adaptation process the clock rate on either side of the process must be stable. If either clock rate is 'jittery' then this jitter is transferred to the PCR values. In a modulator, such as an orthogonal frequency division multiplex (OFDM) modulator, the output clock rate will be set to a stable value, but the input rate will depend on the communication channel between the multiplexer and the modulator. This communication channel will not typically present a stable data rate and so the input rate smoothing buffer 102 must be placed before the PCR filter 104 to convert a data burst and/or jittery input rate to a transport stream with a continuous stable bit rate 103.

Some of the problems with this prior art method are that the input transport stream rate must be smoothed before the rate adaptation process can be performed. A large buffer may be required to perform this transport stream rate smoothing. Additionally, the clock signal for the continuous stable bit rate data 103 must be generated and locked to the input data rate. The technique of locking this clock to the input rate often has to be optimised for different input data interfaces. For example, many input interfaces will present data bursts in various packet sizes, such as DVB, ASI and ATM interfaces. Optimal clock locking techniques are only achieved if these packet sizes are taken into account. Furthermore, if an unacceptable delay occurs in the input transport stream the smoothing buffer may not be large enough to cope and data loss will occur. An example of such a delay includes transport stream switching. The larger the size of smoothing buffer, the greater the latency through the system - this is particularly undesirable in situations requiring direct two-way communications, such as a live interview between a studio and an outside broadcast unit.

Accordingly, one object of the present invention is to overcome at least some of the problems of the prior art, and to provide a system for rate adapting an input transport stream in a simple and effective manner.

According to a first aspect of this invention, there is provided a method of processing an input bit stream, including a plurality of data packets and synchronisation markers, to produce an output bit stream at a predetermined bit rate, wherein the average bit rate of the input bit stream is not greater than the predetermined bit rate, the method comprising the steps of measuring the bit rate of the input bit stream; inserting null information into the input bit stream to increase the bit rate of the input bit stream to substantially match the predetermined bit rate; deriving a delay of the input bit stream introduced by the inserting step; and amending the synchronisation markers in dependence of the derived delay.

According to a second aspect of this invention there is provided an apparatus for processing an input bit stream which includes a plurality of data packets and synchronisation markers to produce an output bit stream at a predetermined bit rate, wherein the average bit rate of the input bit stream is not greater than the predetermined bit rate, said apparatus including means for measuring the bit rate of the input bit stream, means for inserting null information in the input bit stream to increase the bit rate of the input bit stream to substantially match the predetermined bit rate, means for deriving the delay of the input bit stream by the inserting means, and means for revising the synchronisation markers in dependence upon the derived delay.

The invention avoids the need of smoothing the input data rate before the transport rate adaptation process required by the prior art. Also, the present invention removes the requirement for phase locked loop circuits, optimised for various input interfaces, and large input smoothing buffers, and provides a simple, accurate and effective way of transport rate adapting a transport stream.

The invention will now be described, by way of example, with reference to the accompanying diagrams, in which:

Figure 1 is a prior art block diagram showing an overview of a system for performing transport stream rate adaptation;

Figure 2 shows an embodiment of a transport rate adapter according to the present invention.

In order for the rate adapter to function correctly, the input transport stream must be at a bit rate no greater than the output bit rate of the transport rate adapter. Referring to Figure 2 an input transport stream 200 is input to an input rate monitor 202. The monitor 202 monitors the bit rate of the input transport stream 200. Although the bit rate of the transport stream will generally be fairly precise at the source (e.g. at an encoder) without a common frequency reference the transport stream rate can only be determined from the transport stream itself. A measure of the input bit rate is fed to a controller 210. The transport stream 200 is also input to a FIFO buffer 204. The buffer 204 can be any size greater than 1 packet. The larger the buffer the more protection is provided against buffer overflow due to data bursts. The output from the FIFO buffer 204 and the output from a null packet generator 206 are fed to a multiplexer 208 to produce a multiplexed output bit stream 209. The controller 210 controls the multiplexer 208 in such a way as to provide a constant output bit rate bit stream 209. If the input bit stream is lower than the required output bit rate, null packets are inserted in the transport stream by the multiplexer 208. This operation must be carefully managed to prevent the FIFO 204 from under-flowing. Preventing overflow of the FIFO 204 can only be achieved by ensuring that the bit rate of the input transport stream is below that of the output transport stream.

The PCR values in the transport stream 209, at the output of the multiplexer 208, are thus likely to be corrupt. This is due to the insertion of null packets. The PCR values in the output bit stream must be processed to remove the effects of any corruption - a PCR corrector 212 achieves this.

As the data is re-timed to allow the insertion of null packets, the moment in time that the transport stream data is presented to the receiver will be changed. The PCR corrector 212 must correct the PCRs in the transport stream 209 to take into account the length of time it takes to perform the transport rate adaptation process outlined above. This period will be referred to hereinafter as the process delay. Since it is possible to calculate the process delay without having to use complex measurement techniques, it is possible to virtually correct the PCRs in the transport stream 209.

For the purpose of further explanation, assume the fill level of the FIFO 204 is initialised to 8 packets full, i. e. that 8 packets of data are placed in FIFO 204, before starting to extract data from the buffer. In this case, when extraction of the data from FIFO 204 begins, the process delay will be the number of bytes in eight packets of data multiplied by the time it took to receive one byte. This value is then converted to 27MHz sample periods (since this is the unit used in MPEG encoders for synchronisation purposes).

$$\mathrm{Pr}ocessDelay_{initial} = 8 \times packet\_length \times input\_period \times 27 \times 10^6 \qquad \text{- Equation 1}$$

Where *packet _ length* =188 or 204 (if Reed-Solomon encoder used).

Given that the output bit rate is different to the input bit rate, the fill level of the FIFO buffer 206 will change as each byte is output. This is true even if the input is at a constant bit rate, assuming the input rate is at a lower rate as required. This change in fill level creates a corresponding change in the process delay. For each byte output:

$$\mathrm{Pr}ocessDelay = \mathrm{Pr}ocessDelay_{instaneous} + ((output\_period - input\_period) \times 27 \times 10^6) \qquad \text{-Equation 2}$$

The process delay is calculated for each byte output, so that every byte is accounted for. Since the input bit rate is generally lower than the output bit rate the FIFO 204 will start to empty, hence the process delay will decrease. To prevent under-flow of the FIFO 204 occurring, null packets are inserted in the bit stream and therefore no data will be removed from the FIFO at this time. At the same time data is still being received by the FIFO buffer, and hence the FIFO starts to fill up. In this case, when no data is being removed from the FIFO buffer the process delay can be given as:

$$\mathrm{Pr}ocessDelay = \mathrm{Pr}ocessDelay_{instaneous} + (output\_period \times 27 \times 10^6) \qquad \text{- Equation 3}$$

This calculation must be performed for each byte of null packet outputted. The PCR corrector 212 adds this process delay to every PCR value it finds in the data stream, thereby correcting the PCR values corrupted by the transport rate adaptation process itself.

If the measurements and calculations are performed accurately, the average process delay should be equivalent to the average fill level of the FIFO buffer. The process delay is the calculated expected fill level of the FIFO buffer, converted to 27 MHz time periods. However, due to inaccuracies in the measurements and the calculations, the average fill level and average process delay may drift apart. This can be accounted for by modifying Equation 2 to become:

$$\mathrm{Pr}ocessDelay = \mathrm{Pr}ocessDelay + (output\_period - input\_period) \times 27 \times 10^6) +$$

$$\alpha((FIFO\_Fill\_Level \times input\_period \times 27 \times 10^6) - \mathrm{Pr}ocessDelay) \qquad \text{- Equation 4}$$

$\alpha$ is a coefficient, which controls the bandwidth of the PLL, used to lock the *ProcessDelay* to the *FIFO_Fill_Level.* Equation 4 calculates the difference between the calculated process delay and the instantaneous measured process delay. The instantaneous measured delay is the FIFO fill level, converted to a time base with units of 27 MHz time periods. This difference is taken as an error value and a portion thereof is added on to the process delay. The effect of the error value is to reduce the difference between the calculated process delay and instantaneous measured process delay to an average of zero. Hence the process delay becomes locked to the average fill level of the FIFO. A high value of $\alpha$ will result in the process delay quickly tracking changes in the FIFO fill level, but this makes the process delay more susceptible to jitter in the fill level of the FIFO caused by jitter on the input stream. The value of $\alpha$ must be set to a value low enough to avoid problems with FIFO fill level jitter.

For each data byte output, the process delay should be recalculated using equation 4, for each null packet byte output, the process delay should be recalculated using equation 3. The process delay is a continuously updated value, accounting for the movement of data.

The quality, and hence accuracy, of the PCR correction according to the present invention is governed by a number of factors. These include the accuracy of which the process delay can be calculated, the amount of averaging used in determining the input bit rate, and the value of $\alpha$ used in Equation 4 for determining the process delay. These calculations may be implemented in either hardware or software.

In the existing transport rate adaptation system, the quality of the PCR correction is dependent on the effectiveness of the input rate smoothing circuit. In addition, if the input has a large amount of jitter then a very large input smoothing buffer may be required, along with a low bandwidth phase locked loop. As the required quality of the PCR increases so does the size of any input smoothing buffer. The system of the present invention removes the requirement for phase locked loop circuits, optimised for various input interfaces, and large input smoothing buffers, and provides a simple, accurate and effective way of transport rate adapting a transport stream.

**Claims**

1.  A method of processing an input bit stream (200), including a plurality of data packets and synchronisation markers, to produce an output bit stream(214) at a predetermined bit rate, wherein the average bit rate of the input bit stream is not greater than the predetermined bit rate, the method includes the steps of:

    measuring(202) the bit rate of the input bit stream;
    inserting null information(206) into the input bit stream to increase the bit rate of the input bit stream to substantially match the predetermined bit rate;
    deriving (208-212) a delay of the input bit stream introduced by the inserting step; and
    amending (212) the synchronisation markers in dependence of the derived delay.

2.  A method as claimed in claim 1 wherein the delay is derived for each byte output.

3.  A method as claimed in claim 2 wherein the input bit stream (200) is applied to a FIFO buffer (204), the average bit rate fill level of which is controlled (210).

4.  An apparatus for processing an input bit stream (200) which includes a plurality of data packets and synchronisation markers to produce an output bit stream (214) at a predetermined bit rate, wherein the average bit rate of the input bit stream is not greater than the predetermined bit rate, said apparatus including means (202) for measuring the bit rate of the input bit stream, means (206) for inserting null information in the input bit stream to increase the bit rate of the input bit stream to substantially match the predetermined bit rate, means (208-212) for deriving the delay of the input bit stream by the inserting means, and means (212) for revising the synchronisation markers in dependence upon the derived delay.

5.  An apparatus as claimed in Claim 4 wherein said delay deriving means is arranged to derive said delay for each byte output.

6.  An apparatus as claimed in claim 5 wherein a FIFO buffer (204) is arranged to receive said input bit stream and control means (210) controls the average bit rate fill level of said FIFO buffer.

# Fig.1.
## PRIOR ART

# Fig.2.